# EUROPÄISCHE PATENTSCHRIFT

(11) **EP 0 634 459 B1**
(45) Veröffentlichungstag und Bekanntmachung des Hinweises auf die Patenterteilung: **11.04.2001**
(21) Anmeldenummer: 94110103.2
(22) Anmeldetag: 29.06.1994
(51) Int. Cl.: C09C 3/12, C09D 5/36

(54) **Formulierungen**
Formulations
Formulations

(30) Priorität: 16.07.1993 DE 4323914
(43) Veröffentlichungstag der Anmeldung: 18.01.1995
(73) Patentinhaber: MERCK PATENT GmbH, 64293 Darmstadt (DE)
(72) Erfinder: Kieser, Manfred, Dr., D-64291 Darmstadt (DE); Hennemann, Alfred, D-64319 Pfungstadt (DE)

(56) Entgegenhaltungen:
- EP-A- 0 492 223

## Beschreibung

Die vorliegende Erfindung betrifft Formulierungen, die im wesentlichen aus einem Lack oder Gießharz und einem silanisierten Perlglanzpigment bestehen.

Bei Metalleffektpigmenten gibt es in ihren Anwendungsverhalten verschiedene Typen von Pigmenten, nämlich die sogenannten leafing- und die non-leafing-Typen.

Als "leafing" bezeichnet man das Aufschwimmen bzw. Anreichern und die Orientierung von Pigmenten an der Oberfläche eines Beschichtungsstoffes oder einer Beschichtung. Unter dem Einfluß der Grenzflächenspannung zwischen Pigment und Beschichtungsmasse bewegen sich die lamellaren Pigmentteilchen zur Oberfläche der Beschichtungsmasse und schließen sich dort zu einem lückenlosen Film zusammen. So entsteht optisch der Eindruck einer geschlossenen metallischen Oberfläche mit hohem Reflexionsvermögen und silberhellen Metallglanz. Das Phänomen des leafing-Vermögens wurde bisher nur bei Metalleffektpigmenten beobachtet.

Bei Perlglanzpigmenten auf Glimmerbasis sind bisher nur Pigmente bekannt mit non-leafing Eigenschaften; d.h. Perlglanzpigmente zeigen in nahezu allen Einsatzgebieten ein non-leafing-Verhalten, also eine gute Verträglichkeit mit dem sie umgebenden Medium, d.h. die einzelnen Pigmentteilchen sind vollkommen benetzt und verteilen sich in dem Medium, in dem sie eingebettet sind.

In manchen Anwendungsgebieten, insbesondere in solchen bei denen die Orientierung von Perlglanzpigmenten nur unvollständig erfolgt, wie Lacken, Pulverlacken und Gießharzen wird allerdings sehr oft ein leafing-Verhalten gewünscht.

Es bestand daher die Aufgabe Perlglanzpigment-haltige Formulierungen zu finden, in denen ein leafing-Effekt beobachtet wird.

Überraschenderweise wurde nun gefunden, daß Perlglanzpigmente, die mit dem Ziel der besseren Verträglichkeit mit einem Silan beschichtet wurden, in Lacken und Gießharzen ein starkes leafing-Verhalten zeigen. Das "leafing" führt in der Formulierung zu einer wesentlich besseren Orientierung der Pigmente an der Oberfläche, was einen erhöhten Perlglanz bewirkt.

Gegenstand der Erfindung sind daher Formulierungen, im wesentlichen bestehend aus einem Lack oder Gießharz, dadurch gekennzeichnet, daß sie Perlglanzpigmente enthalten, die mit ein oder mehreren Silanen der Formel I beschichtet sind,

SiR¹R²R³R⁴ I

worin
R¹ und/oder R² Alkyl mit 1-30 C-Atomen, worin auch eine oder zwei nicht benachbarte CH₂-Gruppen durch -CH=CH-, -O-, -CO-, -COO-oder -OCO- ersetzt sein können und die verbleibenden Reste R¹⁻⁴ unabhängig voneinander Halogen oder Alkoxy mit 1-20 C-Atomen, worin auch eine oder zwei nicht benachbarte CH₂-Gruppen durch -CH=CH-, -O-, -CO-, -COO- oder -OCO- ersetzt sein können,
bedeuten.

Pigmente, beschichtet mit einem Silan der Formel I sind bereits aus der EP 0 492 223 bekannt. Die dort beschriebenen Pigmente werden zur Vergilbungsinhibierung von Kunststoffen verwendet.

Die Kombination - silanisiertes Perlglanzpigment und Lack oder Gießhart - zur Erzielung eines leafing-Effektes wird dort aber nicht beschrieben.

Wesentlicher Bestandteil der erfindungsgemäßen Formulierung ist das silanisierte Perlglanzpigment. Als Basispigment können alle üblichen Perlglanzpigmente verwendet werden, z.B. Glimmer- oder Silikatplättchen beschichtet mit farbigen oder farblosen Metalloxiden wie TiO₂, Fe₂O₃, SnO₂, Cr₂O₃, ZnO und anderen Metalloxiden, allein oder in Mischung in einer einheitlichen Schicht oder in aufeinanderfolgenden Schichten. Diese Pigmente sind z.B. aus den deutschen Patenten und Patentanmeldungen 14 57 468, 19 59 998, 20 09 566, 22 14 545, 22 15 191, 22 44 298, 23 13 331, 25 22 572, 31 37 808, 31 37 809, 31 51 343, 31 51 354, 31 51 355, 32 11 602 und 32 35 017 bekannt und im Handel erhältlich, z.B. unter dem Warenzeichen Iriodin® von der Fa. E. Merck, Darmstadt.

Die Silanisierung der Perlglanzpigmente erfolgt wie in der EP 0 492 223 beschrieben. Bevorzugt verwendete silanisierte Perlglanzpigmente sind Pigmente, insbesondere mit TiO₂ beschichtete Glimmerpigmente, die mit einem Silan oder Silangemisch der Formel I SiR¹R²R³R⁴ beschichtet sind, worin die Reste R¹⁻⁴ folgende Bedeutungen besitzen:
- R¹ und/oder R² bedeuten Alkyl mit 1-30 C-Atomen, und insbesondere 10-30 C-Atomen, worin auch eine oder zwei nicht benachbarte CH₂-Gruppen durch -CH=CH- und/oder -O- ersetzt sein können. Insbesondere bevorzugt sind Decyl-, Undecyl-, Dodecyl-, Tridecyl-, Tetradecyl-, Pentadecyl-, Hexadecyl-, Heptadecyl-, Octodecyl-, Nonadecyl-, Eicosanyl-, Heneicosanyl-, Docasanyl-, Tricosanyl-, Tetracosanyl-, Pentacosanyl-, Hexacsanyl-, Heptacosanyl-, Octacosanyl-, Nonacosanyl, Triacontanyl-, 12,12-Dimethyltetradecyl-, 11-Propyl12-butylpentadecyl- und 8,8-Dimethyl-12-propyl-13-propylhexadecylReste.
- die verbleibenden Reste R¹⁻⁴ bedeuten Halogen oder Alkoxy mit 1-20 C-Atomen, insbesondere 1-10 C-Atomen, worin auch eine oder zwei nicht benachbarte CH₂-Gruppen durch -CH=CH-, -O-, -CO-, -COO- oder -OCO- ersetzt sein können. Insbesondere bevorzugt sind Fluor-, Chlor-, Methoxy-, Ethoxy-, Propoxy-, Butoxy-, Pentoxy-, Hexoxy-, Heptoxy-, Octoxy,- Nonoxy- oder Decoxyreste.

Insbesondere bevorzugt werden Perlglanzpigmente verwendet, die mit einem Silan oder Silangemisch der Formel IA

(CₙH₂ₙ₊₁)Si(OCₘH₂ₘ₊₁)₃ IA

worin n 1-30, und
m 1-10 bedeutet, beschichtet sind. Das Silangemisch besteht vorzugsweise aus zwei oder drei Silanen der Formel I oder IA.

Für die erfindungsgemäße Formulierung sind alle üblichen Gießharze, z.B. Gelcoats sowie Lacksysteme geeignet. Unter Lacksystem sind hier alle lösungsmittelhaltigen oder auch lösungsmittelfreien Bindemittelsysteme zu verstehen, mit denen durch physikalische oder chemische Methoden, z.B. Trocknen bei Raumtemperatur oder erhöhten Temperaturen bis zu etwa 200 °C, chemische oder durch Strahlung, z.B. UV-Strahlung, induzierte Vernetzung und/oder Polymerisation sowie andere übliche Behandlungsmethoden glatte und gut haftende Filme gebildet werden können. Vorzugsweise werden high-solid Lacke, UV- und elektronenstrahl-härtende Lacke und insbesondere Pulverlacke verwendet.

Die Herstellung der Formulierung ist einfach und leicht zu handhaben. Das silanisierte Perlglanzpigment wird mit oder ohne Lösungsmittelzusatz in den Lack oder in das Gießharz eingerührt und intensiv gemischt (z.B. mit einem modifizierten Dissolver). Die Formulierung wird anschließend auf das zu beschichtende Substratmaterial appliziert (z.B. durch Pinseln, Tauchen, Sprühen oder elektrostatisch), so daß die Substratoberfläche vollständig mit einem homogenen Film bedeckt ist. Zuletzt wird unter den üblichen Bedingungen die Beschichtung ausgehärtet. Durch den leafing-Effekt erhält man eine stark perlglänzende Beschichtung, bei der das Perlglanzpigment an der Oberfläche angereichert ist.

Das leafing-Vermögen, also das Aufschwimmen der Perlglanzpigmente an die Oberfläche des Lacks bzw. des Gießharzes, sowie die leafing-Stabilität, d.h. unverändertes leafing-Vermögen über eine längeren Zeitraum in der Formulierung, hängen vom Lacksystem und vom verwendeten Gießharz ab.

Der Pigmentierungsgrad, die Viskosität und das Härtungsverhalten des Lackes bzw. Gießharzes können ebenfalls den leafing-Effekt beeinflussen.

Für ein gutes leafing-Vermögen sollte die pigmentierte Formulierung nicht mehr als 15 Gew.% an Perlglanzpigmenten enthalten. Bevorzugt liegt der Pigmentanteil zwischen 0,3-10 %, insbesondere bei 1-5 % bezogen jeweils auf Bindemittel bzw. Harz.

Auf die silanisierten Pigmente können auch noch ein oder mehrere Klarlackschichten, z.B. Wasserlack, Pulverlack, zur Verbesserung der Oberflächenqualität als Decklack aufgebracht werden, wodurch in der Regel noch eine Verbesserung sowohl des Aussehens als auch der Haltbarkeit der Gesamtlackierung erzielt wird. Der transparente Schlußlack ist jedoch nicht unbedingt notwendig.

Die erfindungsgemäßen Formulierungen können auf beliebige Substratmaterialien, beispielsweise Metalle wie Eisen, Stahl, Aluminium, Kupfer, Bronze, Messing sowie Metallfolien aber auch metallüberzogene Oberflächen von Glas, Keramik und Beton, als auch auf Holz, z.B. Möbel, Ton, Papier, Verpackungsmaterialien, z.B. Kunststoffbehälter, Folien oder Pappen, oder andere Materialien zu dekorativen und/oder schützenden Zwecken aufgebracht werden. In allen Fällen erhält man infolge des Leafingeffektes stark glänzende Lackierungen mit einem erhöhten Reflektionsvermögen. Durch die kompakte Plättchenstruktur der einzelnen Pigmentteilchen an der Oberfläche wird weiterhin eine gute mechanische und chemische Resistenz erreicht.

Die folgenden Beispiele sollen die Erfindung erläutern, ohne sie jedoch zu begrenzen.

### Beispiel 1

### I. Pigmentpräparation

1. Schritt
   3 g n-Hexyldecyl-triethoxysilan (Si 116 der Degussa AG, Frankfurt, BRD) werden mit 3 g H₂O und 50 g Ethanol 0,5 h bei Raumtemperatur gerührt.
2. Schritt
   150 g Iriodin 103 (mit TiO₂ beschichtes Glimmerplättchen der Teilchengröße 10-60 µm der Fa. E. Merck, Darmstadt, BRD) werden in einem geeigneten Mischer (z.B. modifizierter Dissolver) vorgelegt. Die vorhydrolysierte Silanlösung (Si 116-Lösung) wird zu dem bewegten Pigment gegeben. Innerhalb 1 h wird das benetzte Pigment unter Rühren auf 100 °C erwärmt. Zuletzt wird das beschichtete Perlglanzpigment 3 h bei 150 °C getrocknet.

### II. Anwendungstechnischer Vergleich von leafing- und non-leafing-Pigmenten im Pulverlack

a) Unbehandeltes Perlglanzpigment (non-leafing Typ)
   5 g Iriodin 103 werden mit 95 g Polyester-TGIC-Pulverlack (Teodur 00013 klar, Fa. Herberts, Wuppertal, BRD) trocken und intensiv miteinander gemischt.
   Die Applikation erfolgt elektrostatisch auf ein Alu-Blech. Die Aushärtung erfolgt unter den für Pulverlack üblichen Bedingungen 20 min bei 200 °C. Man erhält eine perlglänzende Lackierung ohne Leafing-Erscheinung. Das Pigment ist in der Matrix gleichmäßig verteilt.
b) Silanisiertes Perlglanzpigment (leafing-Typ)
   Analog IIa) werden 5 g des unter I. erhaltenen TiO₂-Glimmerpigmentes mit 95 g Polyester-TGIC-Pulverlack trocken intensiv miteinander gemischt.
   Die Applikation erfolgt elektrostatisch auf ein Alu-Blech. Die Aushärtung des Pulverlackes erfolgt wie beim unbehandelten Pigment 20 min bei 200 °C.
   Man erhält eine stark glänzende Lackierung, bei der das Pigment an der Oberfläche aufgeschwommen ist. Das Pigment hat sich an der Oberfläche der Matrix angereichert (leafing-Verhalten).

### Beispiel 2

### I. Pigmentpräparation

Die Pigmentpräparation erfolgt analog Beispiel 1, allerdings wird anstelle von Iriodin 103, Iriodin 119 (mit TiO₂ beschichtetes Glimmerplättchen der Teilchengröße 5-25 µm) eingesetzt.

### II. Anwendungstechnischer Vergleich von leafing- und non-leafing Pigmenten in ungesättigtem Polyesterharz

a) Unbehandeltes Perlglanzpigment (non-leafing Typ)
   0,5 g Iriodin 119 werden mit 50 g Palatal K 700 (Fa. BASF, Ludwigshafen, BRD) und mit 0,2 g Accelatator NL 49 S (Akzo Chemicals, Düren, BRD) 15 min. gerührt. Danach werden 1,0 g Cyclonox 11 (Akzo Chemical, Düren, BRD) zugegeben und noch 1 min. gerührt. Der Ansatz wird dann geteilt. Der erste Teil wird mit 1 mm Schichtdicke auf Glas gerakelt. Der zweite Teil wird mit einem Pinsel auf Glas aufgestrichen. Ergebnis:
   Beide Muster zeigen eine uneinheitliche Verteilung. Bei dem Pinselauftrag sind die Pinselstriche erkennbar. Bei dem Auftrag mit der Rakel sind "Bénardsche Zellen" erkennbar. Es kann ein schwacher Perlglanz beobachtet werden.
b) Silanisiertes Perlglanzpigment (leafing Typ)
   Analog zu dem oben angeführten Versuch wird das unter I silanisierte Perlglanzpigment (Iriodin 119 mit Silannachbehandlung) verwendet. Ansonsten sind die Versuchsbedingungen unverändert.
   Ergebnis:
   Beide Muster zeigen eine einheitliche Schicht von Perlglanzpigmenten an der Oberfläche. Weder Pinselstriche noch "Bénardsche Zellen" sind erkennbar. Der Perlglanz ist sehr gut.

### Beispiel 3

### I. Pigmentpräparation

Analog Beispiel 2, allerdings wird anstelle des n-Hexyldecyl-triethoxysilan Methyl-triethoxysilan (Fa. ABCR, Karlsruhe) eingesetzt.

### II. Anwendungstechnischer Vergleich von leafing- und non-leafing Pigmenten In UV-härtendem Klarlack

a) Unbehandeltes Perlglanzpigment (non-leafing Typ)
   0,5 g Iriodin 119 werden mit 50 g UV-Klarlack (Fa. Jäger, Düsseldorf, BRD) 15 min. lang gerührt. Der Ansatz wird dann geteilt. Der erste Teil wird mit 250 µm Schichtdicke auf Glas gerakelt. Der zweite Teil wird mit einem Pinsel auf Glas gestrichen. Nach einer Minute Wartezeit werden beide Muster mit einer 300 Watt UV-Lampe gehärtet.
   Ergebnis:
   Beide Muster zeigen eine unheitliche Verteilung. Bei dem Pinselauftrag sind die Pinselstriche erkennbar. Bei dem Auftrag mit der Rakel sind "Bénardsche Zellen" erkennbar. Der Perlglanz ist nur schwach ausgeprägt.
b) Silanisiertes Perlglanzpigment (leafing Typ)
   Analog zu dem oben angeführten Versuch wird silanisiertes Perlglanzpigment (Iriodin 119 mit Silannachbehandlung) verwendet. Vor der Belichtung/Härtung wird 1 min. zur Erzielung eines Leafingeffektes gewartet. Ansonsten werden die Versuchsbedingungen beibehalten.
   Ergebnis:
   Beide Muster zeigen eine einheitliche, hochglänzende Schicht von Perlglanzpigmenten an der Oberfläche. Weder Pinselstriche noch "Bénardsche Zellen" waren erkennbar. Der Perlglanz ist sehr gut.

## Patentansprüche

1. Formulierungen besteht im wesentlichen aus einem Lack oder Gießharz, dadurch gekennzeichnet, daß sie Perlglanzpigmente enthalten, die mit ein oder mehreren Silanen der Formel I beschichtet sind,
SiR¹R²R³R⁴ I
worin
R¹ und/oder R² Alkyl mit 1-30 C-Atomen, worin auch eine oder zwei nicht benachbarte CH₂-Gruppen durch -CH=CH-, -O-, -CO-, -COO- oder -OCO- ersetzt sein können und die verbleibenden Reste R¹⁻⁴ unabhängig voneinander Halogen oder Alkoxy mit 1-20 C-Atomen, worin auch eine oder zwei nicht benachbarte CH₂-Gruppen durch -CH=CH-, -O-, -CO-, -COO- oder -OCO- ersetzt sein können,
bedeuten.

2. Formulierung nach Anspruch 1, dadurch gekennzeichnet, daß das Silan eine Verbindung der Formel IA
(CₙH₂ₙ₊₁)Si(OCₘH₂ₘ₊₁)₃, IA
ist,
worin
m 1-10
n 1-30
bedeutet.

3. Formulierung nach Anspruch 1, dadurch gekennzeichnet, daß der Anteil an Perlglanzpigment in der Formulierung 0,3-15 Gew.% beträgt.

4. Formulierung nach Anspruch 1, dadurch gekennzeichet, daß der Lack ein Pulverlack ist.

5. Formulierung analog Anspruch 1, dadurch gekennzeichnet, daß ein Lack ein high-solid- oder ein strahlungshärtender Lack ist.

6. Formulierung nach Anspruch 1, dadurch gekennzeichnet, daß das Perlglanzpigment ein mit ein oder mehreren Metalloxiden beschichtetes Glimmer- oder Silikatplättchen ist.

7. Formulierung nach Anspruch 6, dadurch gekennzeichnet, daß das Perlglanzpigment ein mit Titandioxid beschichtetes Glimmerplättchen ist.

8. Mit einem Lack oder Harz entsprechend Anspruch 1 beschichtete Materialien.

## Claims

1. Formulations essentially comprising a film-former or casting resin, characterized in that they contain pearl lustre pigments which are coated with one or more silanes of the formula I
SiR¹R²R³R⁴ I
in which
R¹ and/or R² are alkyl having from 1-30 carbon atoms, in which one or two non-adjacent CH₂ groups may also be replaced by -CH=CH-, -O-, -CO-, -COO- or -OCO-, and the remaining radicals R¹⁻⁴ independently of one another are halogen or alkoxy having from 1-20 carbon atoms, in which one or two non-adjacent CH₂ groups may also be replaced by -CH=CH-, -O-, -CO-, -COO- or -OCO-.

2. Formulation according to Claim 1, characterized in that the silane is a compound of the formula IA
(CₙH₂ₙ₊₁) Si (OCₘH₂ₘ₊₁)₃, IA
in which
m is 1-10 and
n is 1-30.

3. Formulation according to Claim 1, characterized in that the content of pearl lustre pigment in the formulation is from 0.3-15% by weight.

4. Formulation according to Claim 1, characterized in that the film-former is a powder coating.

5. Formulation according to Claim 1, characterized in that the film-former is a high-solids or a radiation-curing film-former.

6. Formulation according to Claim 1, characterized in that the pearl lustre pigment is a mica or silicate flake coated with one or more metal oxides.

7. Formulation according to Claim 6, characterized in that the pearl lustre pigment is a mica flake coated with titanium dioxide.

8. Materials coated with a film-former or resin according to Claim 1.

## Revendications

1. Compositions essentiellement constituées d'une peinture ou d'une résine de coulée, caractérisées en ce qu'elles contiennent des pigments nacrés qui sont enrobés d'un ou plusieurs silanes de formule I
SiR¹R²R³R⁴ I
dans laquelle
R¹ et/ou R² représente(nt) un(des) groupe(s) alkyle ayant de 1 à 30 atomes de carbone, dans le(s)quel(s) un ou deux groupes CH₂ non contigus peuvent également être remplacés par -CH=CH-, -O-, -CO-, -COO- ou -OCO-, et les radicaux R¹⁻⁴ restants représentent, indépendamment les uns des autres, des atomes d'halogène ou des groupes alcoxy ayant de 1 à 20 atomes de carbone, dans lesquels un ou deux groupes CH₂ non contigus peuvent également être remplacés par -CH=CH-, -O-, -CO-, -COO- ou -OCO-.

2. Composition selon la revendication 1, caractérisée en ce que le silane représente un composé de formule 1A
(CₙH₂ₙ₊₁)Si(OCₘH₂ₘ₊₁)₃ IA
dans laquelle
m va de 1 à 10,
n va de 1 à 30.

3. Composition selon la revendication 1, caractérisée en ce que la proportion de pigment nacré dans la composition va de 0,3 à 15 % en poids.

4. Composition selon la revendication 1, caractérisée en ce que la peinture est une peinture en poudre.

5. Composition selon la revendication 1, caractérisée en ce qu'une peinture est une peinture à forte teneur en matière sèche (*high solid*) ou une peinture durcissant par irradiation.

6. Composition selon la revendication 1, caractérisée en ce que le pigment nacré est une paillette de silicate ou de mica enrobé d'un ou de plusieurs oxydes métalliques.

7. Composition selon la revendication 6, caractérisée en ce que le pigment nacré est une paillette de mica enrobée de dioxyde de titane.

8. Matériaux revêtus avec une peinture ou une résine selon la revendication 1.
